# EUROPEAN PATENT APPLICATION

(11) **EP 0 984 402 A2**
(43) Date of publication of application: **08.03.2000**
(21) Application number: 99202827.4
(22) Date of filing: 31.08.1999
(51) Int. Cl.: G07F 7/08, G07F 19/00

(54) **Stored value card terminal**

(30) Priority: 31.08.1998 US 98691 P
(71) Applicant: Citicorp Development Center, Inc., Los Angeles, California 90066 (US)
(72) Inventor: Abramowicz, Miguel, Huntington Beach, CA 92646 (US); Kogen, Mark, Lawndale, CA 90260 (US); Purpura, Phil, Torrance, CA 90505 (US); Tan, Warren Yung-Hang, Thousand Oaks, CA 91360 (US)
(74) Representative: Hynell, Magnus

(57) **Abstract**

A stored value terminal is a customer-activated, graphics touch screen terminal enabling customers to conduct transactions with a stored value card. Customer transactions include: performing balance inquiries, adding cash value to the stored-value card, removing cash value from the stored value card, viewing load and purchase logs resident on the stored value card, and printing reports of the logs and balances as well as transaction records. The stored value terminal allows a user to load value on multiple stored value cards in a single session. The system supports cards with magnetic stripes and cards with embedded chips. The stored value terminal provides an administrative interface for configuring the system and reports pertinent status information to a monitoring facility.

## Description

This application claims priority to applicants' copending provisional application entitled "STORED VALUE TERMINAL" having U.S. Serial Number 60/098,691 filed August 31, 1998.

### FIELD OF THE INVENTION

The present invention relates to a system and method for providing automated service to a holder of a stored value card.

### SUMMARY OF THE INVENTION

The stored value terminal is a customer-activated, graphics touch screen terminal that enables a customer to add and remove cash value to and from a chip embedded in a plastic, encoded stored value card. The terminal, coupled with a unique enclosure design, provides customers with privacy during a transaction.

To use a stored value terminal, a customer begins by inserting a stored value card into a card reader. A customer communicates with the stored value terminal by touching the designated areas of the touch-sensitive, interactive screen. Audible signals and echo characters provide feedback to the customer when a touch-sensitive screen area is activated, or when a selection error is made. Customers receive output in the form of video displays on the screen, and printed records of their transactions.

The stored value terminal gives card holders access to their accounts 24 hours a day. Customer transactions include: performing account balance inquiries, adding cash value to the stored value card, removing cash value from the stored value card, viewing load logs and purchase logs resident on the card, and printing reports of the logs and balances as well as transaction records.

The stored value terminal supports the loading of multiple stored value cards from a single source account in a single session. A user indicates a source account for providing funds either by selecting an account from a list of associated accounts or by inserting an automated teller machine (ATM), credit, debit, or stored value card identifying an account. Then, the user is able to load value from the selected account to one or more stored value cards.

In one embodiment of the invention, a stored value terminal comprises: a card reader device capable of reading information from and writing information to a stored value card, a video display device, a user input device, a communications interface, and a processing device coupled to the card reader device, the video display device, the user input device, and the communications interface. The card reader device receives a destination user card that is a stored-value card. In addition, the user input device receives requests to perform financial transactions between a user account and the destination user card.

In another embodiment, a stored value terminal for performing transactions between a stored value card and an associated account comprises: a card reader device capable of reading information from the stored value card and writing information to the stored value card, a video display device, a user input device, a communications interface for accessing a host computer system, and a processing device coupled to the card reader device, the video display device, the user input device, and the communications interface. The host computer system maintains information regarding a plurality of accounts. The card reader device receives a stored value card for a user that has an associated user account from a plurality of accounts. At least one transaction selection is received from the group consisting of: transferring funds from the stored value card to the associated user account, transferring funds from the associated user account to the stored value card, and determining available funds in the associated user account.

Another embodiment of the present invention is a method for conducting transactions with stored value cards using a stored value terminal. The stored value terminal comprises a processing engine, a video display device, a user input device, and a card reader device. The method comprises: receiving a destination user card that is a stored value card, displaying a list of functions on the video display device, receiving input signals from the user input device, the input signals indicating a selected function from the list of functions, and performing the selected function using the processing engine. The list of functions comprises transactions between a destination user card and a user account.

### BRIEF DESCRIPTION OF THE DRAWINGS

In the drawings:
FIG. 1 depicts a system according to an embodiment of the present invention for a stored value terminal;
FIG. 2 is a perspective view of the cabinet interior in accordance with an embodiment of the present invention;
FIG. 3 depicts a block diagram according to one embodiment of the present invention; and
FIG. 4 depicts a screen view of the log on window for the administrative interface of one embodiment of the present invention.

### DETAILED DESCRIPTION

Reference will now be made to the preferred embodiments of the present invention, examples of which are illustrated in the accompanying figures. While the invention will be described in conjunction with the preferred embodiments, it will be understood that the described embodiments are not intended to limit the invention specifically to those embodiments. On the contrary, the invention is intended to cover alternatives, modifications, and equivalents, which may be included within the spirit and scope of the present invention as defined by the appended claims.

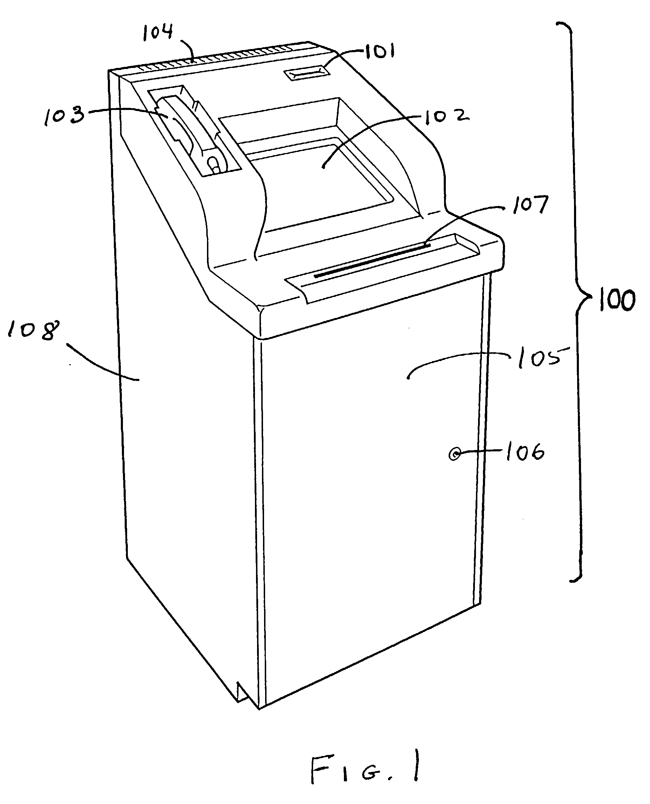

The preferred embodiment of the present invention is shown in Figure 1. The stored value terminal 100 comprises the following components for user interaction: a display panel 102, a card receptacle 101, a telephone handset 103, and an output slot 107. The components for user interaction are configured in a cabinet 108 comprising an exhaust plenum 104 and a front door 105 with a lock 106.

In the preferred embodiment of the present invention, display panel 102 is a touch screen display, providing video output to the user and accepting input from the user. The display component is a 12-inch color LCD monitor and the touch screen interface uses infrared beam technology, forming a grid of infrared beams across the screen. When a finger or stylus touches the surface, the location of the contact is determined. While the preferred embodiment of the present invention uses touch screen technology, other display and input mechanisms are known in the art and could be readily adapted to the present invention.

The touch screen component of display panel 102 allows the user to select an option from a displayed menu and to input information. In one embodiment of the present invention, the system provides audio and video feedback to the user when a touch is detected by the touch screen. A high toned "beep" signals a valid entry and a lower toned "beep" or "boop," signifies an invalid entry.

The touch screen component of display panel 102 is designed with a feature that encrypts the customer's PIN as it is entered. The encrypted touch screen panel disclosed in U.S. Pat. No. 5,768,386 to Yokomoto et al. describes an implementation of an encrypted touch screen display panel and is hereby incorporated by reference. A privacy screen mounted on the touch screen component and a privacy surround placed around the touch screen provides privacy to customer information.

There are three categories of fields used on screens displayed by the SVT: (1) function fields; (2) input fields; and (3) number display fields.

Function fields are used to provide options for users to select. The customer reads instructions during transactions and chooses between given options. For example, a customer may be given the options ADD CASH and RECEIVE RECEIPT. To select an option, the customer presses the proper field on the touch screen display 102.

Input fields are used on screens where a user must enter either an amount or a PIN number. In one embodiment of the present invention, there are three types of input fields: Input, Correction, and Cancel. The input field is shown only when the user is requested to input a PIN or an amount for adding or subtracting cash value. The correction field allows the customer to change an incorrectly entered number or amount. By touching the cancel field, the customer leaves the session in progress and receives his or her card.

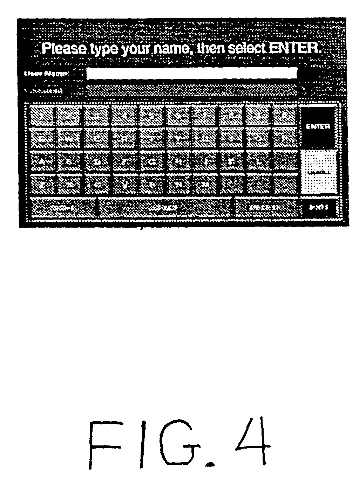

Number display fields consist of alphanumeric or numeric buttons such as that shown by FIG. 4. The buttons are displayed for entering a PIN or the amounts added or subtracted from a stored value card.

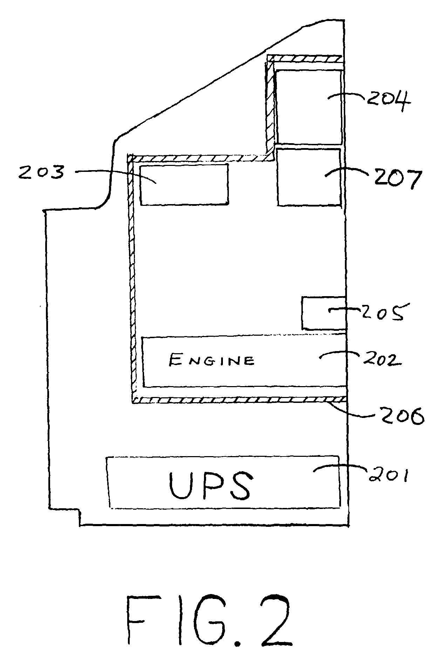

Cabinet 108 contains the internal components shown in Figure 2. The uninterruptible power supply (UPS) 201 provides power with surge protection and battery backup to run the various electronic components of the present invention. The engine 202 is a general-purpose computing device configured to provide a user interface for carrying out the various functions of the stored value terminal 100 discussed below.

In addition, the stored value terminal 100 contains a communications module 205 mounted in cabinet 108. In the preferred embodiment of the present invention, the communications module 108 is a standard modem for connecting to a banking network for conducting account inquiries and transactions. Other embodiments of the present invention use network communication devices such as a network interface card (NIC) and wireless modems to provide communications to a banking network.

Finally, cabinet 108 contains devices for direct interaction with a user. A card reader/transport 204 accepts a stored value card from a user through card receptacle 101. The card reader 204 holds the card while the user conducts a transaction. Once the user has completed all desired inquiries and transactions, the card reader 204 returns the stored value card to the user.

In the preferred embodiment of the present invention, the card reader 204 is an OMRON MVFW Series Motor-Driven Hybrid Card Reader comprising a card transport mechanism, a magnetic stripe read/write head, a embedded chip read/write mechanism, and control electronics. The reader accepts a card into the mechanism and closes a mechanical gate behind it. The reader then reads data on the stored value card, and returns the stored value card to the user after the transaction is complete. In the event of a power failure, the transport reader automatically returns the stored value card to the user with the power stored in the back-up capacitor. If the transport reader is unable to return the card during a power failure, the card is captured when power is restored.

The stored value terminal is adapted to provide services to holders of stored value cards. Various kinds of stored value cards are known in the art. The simplest stored value cards encode information on a magnetic strip in a way similar to traditional credit and debit cards. The more advanced stored value cards use smart card technology. The following U.S. patents describe smart card designs and applications and are incorporated herein by reference: U.S. Pat No. 4,766,293 to Boston, U.S. Pat. No. 4,868,376 to Lessin et al., and U.S. Pat. No. 4,874,935 to Younger.

In one embodiment of the present invention, card reader 204 reads and writes cards with a magnetic stripe, cards with an embedded chip, and integrated cards comprising both a magnetic stripe and an embedded chip.

Cabinet 108 also contains a printer 203 positioned so that receipts may be passed through output slot 107. In the preferred embodiment, the enhanced printer can hold as many as 3,000 continuous form records. The stored value terminal printer 203 is mounted on rails that allow it to slide out for paper replenishment and for maintenance. A description of the transaction is printed on preprinted sheets of paper. A record sheet may contain multiple transaction descriptions, one for each transaction completed during the session. If a customer's transaction description exceeds the form length, multiple sheets are printed.

Components of the stored value terminal such as the display panel 102 and the printer 203 are mounted in the upper portion of the cabinet 108. The lower portion of the cabinet 108 includes a security chest 206 for holding components that must be secured.

The engine 202, mounted in the lower portion of the security chest 206, provides the processing capabilities necessary to operate the stored value terminal 100. The engine 202 comprises a main processor for controlling the peripheral devices within the stored value terminal 100; external communications to the integrated network controller (INC) 301 and to the terminal acquiring host; and a hard disk for storage of the operating system and application programs. One embodiment of the present invention uses a standard personal computer with an INTEL PENTIUM III microprocessor. Any general-purpose computing device could be used as engine 202 without departing from the scope of the present invention.

The stored value terminal 100 also comprises a stored value card collector 207. Card collector 207 has the capacity to store up to 20 stored value cards. If the system determines that a stored value card has been reported stolen, the card reader 204 sends the stored value card to the card collector 207 instead of returning the card to the user.

### Customer Transactions

The stored value terminal allows a user with a stored value card to perform various functions including: account balance inquiries, adding cash value to the stored value card, removing cash value from the stored value card, viewing load and purchase logs resident on the card, and printing reports of the logs and balances as well as transaction records.

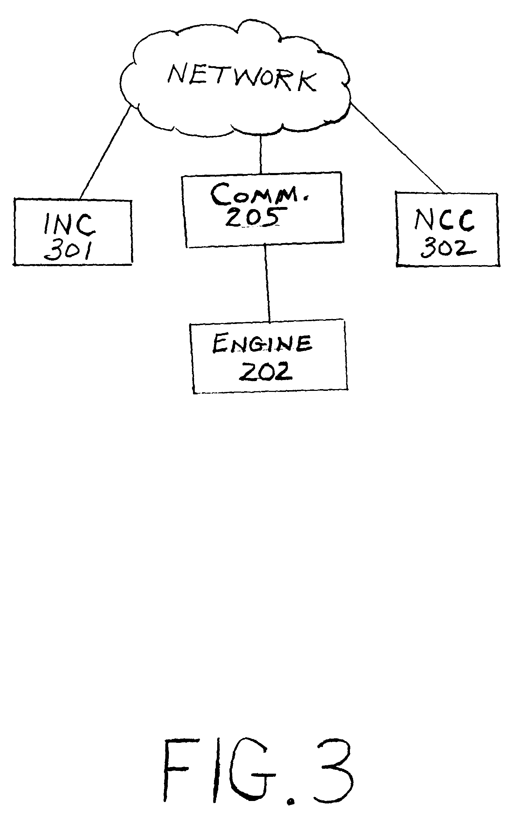

Customer interaction with the stored value terminal 100 is shown by Figure 3. While waiting for a customer, the stored value terminal 100 displays a welcome screen on display 102. The welcome screen instructs the user to insert a card into card receptacle 101 to begin a transaction.

In one embodiment of the present invention, there are two kinds of cards that can be inserted to begin a transaction: a card with a magnetic stripe or a card with an embedded chip for storing value. We first begin by describing sessions begun by a user inserting a card with an embedded chip but no magnetic stripe.

The user begins a session by inserting a stored value card with an embedded chip (e.g., a smartcard). The stored value terminal then requests the user to enter a personal identification number (PIN). If the system determines that the PIN is incorrect, an error message is displayed and the user is again requested to enter the correct PIN. After three incorrect attempts to enter the PIN, the transaction is canceled and a security exception is raised.

If the user entered the correct PIN, then the system displays a menu comprising the following selections: (1) balance inquiry, (2) add cash value, (3) remove cash value, (4) view logs, and (5) cancel transaction..

If the user selects option (1) to obtain a balance inquiry, the stored value terminal 100 displays the remaining cash value stored on the stored value card. The user is then presented with the option to see detailed information from the purchase and load logs stored on the card. If the user selects this option, the desired information is displayed and the user is given the opportunity to print it.

If the user selects option (2) to add cash value, the system queries the user for the amount of value to add. After a user has input the amount to be added, the system verifies that sufficient funds are available in the associated account and completes the transaction.

If the user selects option (3) to remove cash value, the system queries the user to determine the destination of the value from a list of associated account(s). Then, the system queries the amount of value to be removed from the card. If sufficient value is available on the stored value card, then the value is subtracted from the stored value card and transferred to the selected account.

If the user selections option (4) to view logs, the system displays detailed the contents of the load and transaction logs residing on the stored value card. Whenever additional value is added to the stored value card, a record in the load log storing the details of the load operation on the stored value card. Whenever a transaction takes place using the stored value card, information regarding the transaction is stored in a record in the transaction log residing on the stored value card. Once these logs are displayed, the system gives the user the option to print the displayed logs. If the user selects the print option, details of transactions and loads are printed on printer 203.

If the user selections option (5) to cancel the transaction, the user's card is returned and the session ends. The system then displays the welcome screen and waits for a user to begin a new session.

The embodiment discussed above gives the user the ability to transfer value between an associated account and a stored value card. The associated account can be any financial account including a checking account, insured money market account, investment account, savings account, credit card account, etc. The present invention is not intended to be limited to those specific embodiments described; any account may be used regardless of category or financial institution. In the preferred embodiment, the availability of funds is verified electronically before the transaction is permitted; thus only accounts permitting electronic verification can be used.

Other embodiments can be envisioned that extend credit to the holder of the stored value card so that transactions can be completed without instant electronic verification. If such a transaction is authorized, then the user's available credit is temporarily debited until the transaction has been settled. If the transaction is later disallowed, then the user would be liable for the amount of the transaction. This amount could be settled by billing the user or obtaining funds from an associated account.

For example, if a user requested a transaction to transfer US$50 from a credit card to his stored value card, the user's credit line is debited US$50. If the credit card charge is later allowed, then the transaction is settled and the credit line is credited US$50. On the other hand, if the transaction is denied, then the user owes US$50. This amount can be obtained by billing the user directly or by deducting US$50 from an associated account.

As discussed above, card reader 204 is a dual media reader, capable of reading and writing information from either a magnetic strip or an embedded chip. In one embodiment of the present invention, the user inserts an integrated card (a dual media card comprising a magnetic strip and an embedded chip). The integrated card holds value on its chip and can be used as a traditional credit or debit card with its magnetic stripe.

If a user inserts an integrated card into card reader 204, then the user can perform all functions as described above. The magnetic stripe on the stored value card stores information identifying an account in the same manner as traditional ATM, credit, or debit cards. Thus, the integrated card can be used in the same manner as traditional ATM, credit, and debit cards to perform transactions with merchants. The integrated card also contains an embedded chip for storing value on the card. In addition to all of the functionality discussed above, the user is given the option to transfer value between the stored value on the card and the account identified by the magnetic strip.

In one embodiment of the present invention, a unique two card system is implemented to maximize access to funds for the consumer. The user first inserts a source card into card reader 204. The system reads any account information stored on the source card's magnetic strip and determines the value currently stored in the source card's embedded chip. The user is then presented a list of funding sources comprising a list of associated accounts, the value stored on the card's embedded chip, and the account corresponding to the information stored on the source card's magnetic strip. The user then selects the desired source account.

Once a source account has been specified, the system determines if the source card comprises an embedded chip. If an embedded chip is present, the user is asked if the embedded chip is the desired destination. If the user wishes to load value onto another card or if there is no embedded chip on the source card, the system asks the user to insert a stored value card to be loaded.

The user inserts a card into card reader 204 to load value. Once value has been loaded, the user is asked whether additional cards are to be loaded. If there are additional cards, the current stored value card is returned and the user is asked to insert an additional stored value card. This process continues until the user selects that there are no additional cards to be loaded. In this way, a user is able to load several stored value cards in one session without having to begin anew for each card.

If the user has an integrated card, then the whole process becomes streamlined; the magnetic strip on the card identifies the source account and the destination is the card's embedded chip. Since the source account information is stored in the same manner as traditional ATM, credit, and debit cards on a magnetic strip, the integrated card can be used for traditional transactions in the same manner as ATM, credit, and debit cards; however, the integrated cards also contain an embedded chip for storing value which can only be used by supporting merchants. If the user wishes to store value onto the embedded chip from the account identified on the magnetic strip, then only one card is needed.

The stored value terminal allows a user to transfer value to a stored value card. The source account can be a debit, credit, ATM, or stored value card associated with any financial institution. The embodiments discussed above use traditional protocols for verifying and completing transactions with the source account. Any communications protocols or source financial account information could be used without departing from the scope and nature of the present invention.

In one embodiment of the present invention, the stored value terminal includes a cash dispensing mechanism such as those found in traditional automated teller machines (ATMs). The system works as described above; however, when removing money from a stored value card, the user is presented the additional option to withdraw cash. When this option is selected, the value removed from the stored value card must be a multiple of US$10 so that small bills and coins are not required.

One of ordinary skill in the art will appreciate that any user input technology may be applied to the present invention. In the embodiments discussed above, all user prompts are shown on a video display and user input is through a touchscreen. Any other computer input and output mechanisms now known or later developed would be readily applicable to the present invention.

Other features and modifications of the present invention would be apparent to one of ordinary skill in the art. This description of the preferred embodiments is not intended to limit the present invention. Those practicing the present invention would readily appreciate variations and modifications that would not depart from its scope.

### Administrative Interface

The present invention also includes an administrative interface for configuring, monitoring, maintaining, and managing the stored value terminal.

To access the administrative interface, an administrative user must first log on to the stored value terminal. The user logs on by entering an administrative card into the card reader. The system then prompts the user for a username. The user enters a username using the input device and the system then prompts the user for a password. The user enters a password. If the password is correct, then the system displays a main menu corresponding to the user's privileges.

In the preferred embodiment, there are three different log on options, "Field", "UATtest", and "Security".

To login to the stored value terminal (SVT) 100, an administrator must perform the following steps: (1) insert an administrative card into card slot 101 to get the log on screen to appear as shown in FIG. 4; (2) enter an assigned identifier (either "field", "UATest", or "security") by touching the appropriate letters on the screen; (3) touch "Enter"; (4) enter a password touching the appropriate letters on the screen; and (5) touch "Enter" to go to the Main Menu.

To log off the SVT, the administrator touches the "Exit" button on the Main Menu screen. In a few seconds, the Log Off Screen appears. The administrator can press "Yes" to log off the system or press "No" to remain on the system.

In case of errors within the system, the administrator will occasionally need to reboot the SVT. The REBOOT option is a complete system shutdown, including the operating system.

If a customer session is in progress, the STOP SVT command should be used before selecting the REBOOT option so that the application software can be closed before the system components are rebooted. The STOP SVT command only affects the application programs, not the system components.

When the REBOOT command is executed, customers are not able to complete their SVT session. Rebooting is an involved process; system recovery time is significantly longer, compared to the use of the STOP SVT command.

To reboot the SVT, the administrator performs the following steps: (1) the administrator touches REBOOT on the Main Menu screen to make the Reboot Screen appear with a warning message; (2) the administrator touches YES to reboot the system, and NO to go to the LOGOFF screen. Once the system is rebooted, a power-up message is sent to the front-end system indicating the system is operational.

In some cases, the administrator must reconfigure the SVT and change certain information including network parameters such as the following: (1) the node's IP address; (2) the node's TCP/IP subnet mask; and (3) the Router IP address.

To reconfigure the SVT, the administrator presses CONFIGURE SVT on the Main Menu. A confirmation screen is shown to verify the administrator's intentions. The administrator presses OK to begin the configuration.

The Node ID is a unique identifier for every SVT in the Network containing six or eight characters beginning with a lowercase "b". For example, one valid Node ID would be "b1234567".

The node's IP address and subnet mask are 32-bit numbers usually printed as four bytes separated by periods. These numbers are standard conventions followed by any device utilizing the Internet Protocol. For example, "10.2.1.51" represents a 32-bit number that could be used as an IP address. The subnet mask assists the network device in identifying whether a machine is local to the subnet or whether packets must be sent through a router. For example, "255.255.255.0" represents a typical subnet mask.

The router IP address is a 32-bit number used to identify a router. Packets that are destined for a machine that is not on the local subnet are sent to the router to be forwarded to the appropriate destination.

The stored value terminal can be monitored from a Network Control Center (NCC). The stored value terminal reports data pertinent to its operational capabilities including warning messages indicating that the record paper is low or empty, the capture card bin is full, power outage, security exceptions, etc.

Those skilled in the art may practice principles of the present invention in other specific forms without departing from its spirit or essential character. Accordingly, the disclosed embodiments of the invention are merely illustrative and do not serve to limit the scope of the invention set forth in the following claims.

## Claims

1. A stored value terminal for performing financial transactions with a stored value card, comprising:
a card reader device capable of reading information from and writing information to a stored value card;
a video display device;
a user input device;
a communications interface; and
a processing device coupled to the card reader device, the video display device, the user input device, and the communications interface;
wherein the card reader device receives a destination user card, the destination user card being a stored value card, and wherein the user input device receives requests to perform financial transactions between a user account and the destination user card.

2. The stored value terminal of claim 1, wherein the user input device is a touch screen.

3. The stored value terminal of claim 1, wherein the destination user card is an integrated card, the integrated card comprising an embedded chip and a magnetic stripe.

4. The stored value terminal of claim 3, wherein the magnetic stripe stores data identifying the user account.

5. The stored value terminal of claim 1, wherein the card reader device receives a source user card, the source user card storing information identifying the user account.

6. The stored value terminal of claim 5, wherein the card reader device receives a plurality of destination user cards.

7. The stored value terminal of claim 6, wherein the stored value terminal performs financial transactions between the user account and each of the plurality of destination user cards.

8. The stored value terminal of claim 1, wherein the stored value terminal further comprises a cash dispensing mechanism.

9. The stored value terminal of claim 8, wherein the financial transactions received by the user input device comprise withdrawing cash from the destination user card.

10. A stored value terminal for performing transactions between a stored value card and an associated account, comprising:
a card reader device capable of reading information from the stored value card and writing information to the stored value card;
a video display device;
a user input device;
a communications interface for accessing a host computer system, the host computer system maintaining information regarding a plurality of accounts; and
a processing device coupled to the card reader device, the video display device, the user input device, and the communications interface;
wherein a stored value card for a user is received by the card reader device, the stored value card having an associated user account, the associated user account being one from the plurality of accounts, and wherein at least one transaction selection is received, the at least one transaction selected from the group consisting of: transferring funds from the stored value card to the associated user account, transferring funds from the associated user account to the stored value card, and determining available funds in the associated user account.

11. A method for conducting transactions with stored value cards using a stored value terminal, the stored value terminal comprising a processing engine, a video display device, a user input device, and a card reader device, comprising:
receiving a destination user card, the destination user card being a stored value card;
displaying a list of functions on the video display device;
receiving input signals from the user input device, the input signals indicating a selected function from the list of functions; and
performing the selected function using the processing engine;
wherein the list of functions comprises transactions between the destination user card and a user account.

12. The method of claim 11, wherein the user input device is a touch screen.

13. The method of claim 11, wherein the destination user card is an integrated card, the integrated card comprising an embedded chip and a magnetic stripe.

14. The method of claim 13, wherein the magnetic stripe stores data identifying the user account.

15. The method of claim 11, wherein the card reader device receives a source user card, the source user card storing information identifying the user account.

16. The method of claim 15, wherein the card reader device receives a plurality of destination user cards.

17. The method of claim 11, wherein the stored value terminal further comprises a cash dispensing mechanism.

18. The method of claim 17, wherein the list of functions comprises withdrawing from the destination user card.
